# EUROPÄISCHE PATENTSCHRIFT

(11) **EP 0 552 647 B1**
(45) Veröffentlichungstag und Bekanntmachung des Hinweises auf die Patenterteilung: **06.03.1996**
(21) Anmeldenummer: 93100365.1
(22) Anmeldetag: 13.01.1993
(51) Int. Cl.: E04B 2/78

(54) **Halterung für Füllungsplatten, Drahtgitter, Drahtgewebe od.dgl. in durch Systemprofilschienen begrenzten Rahmenfeldern**
Fixing device for panels, wire grilles, wire fabric or similar in frames bordered by profiled guide rails
Dispositif de maintien pour panneaux, grillages, tissu de fils métalliques dans des encadrements entourés par des rails profilés

(30) Priorität: 18.01.1992 DE 4201223
(43) Veröffentlichungstag der Anmeldung: 28.07.1993
(73) Patentinhaber: SCHÜCO International KG, D-33609 Bielefeld (DE)
(72) Erfinder: Diekmann, Bernd, Dipl.-Ing., W-4802 Halle/Westfalen (DE); Henkel, Michael, W-4802 Halle/Westfalen (DE)
(74) Vertreter: Stracke, Alexander, Dipl.-Ing.

(56) Entgegenhaltungen:
- DE-A- 3 120 366
- FR-A- 1 582 187
- GB-A- 2 228 034
- US-A- 4 702 050

## Beschreibung

Die Erfindung bezieht sich auf eine Vorrichtung für Füllungsplatten, Drahtgitter, Drahtgewebe o.dgl. in Rahmenfeldern, die durch mit Verankerungsnuten versehenen Systemprofilschienen begrenzt sind.

Die Systemprofilschienen sind symmetrisch ausgebildet, weisen auf dem Umfang verteilte Verankerungsnuten mit hinterschnittenen Flächen auf und können mit Kanälen versehen sein, die als Schraubkanäle oder als Medium führende, z.B. Druckluft führende Kanäle verwendet werden können.

Mit diesen Systemprofilschienen können die verschiedensten Maschinenkonstruktionen für unterschiedlichste Anwendungen ausgeführt werden. Durch die Kombination der Systemprofilschienen können Fachwerke bzw. Raumtragwerke erstellt werden, bei denen es ggf. aus Gründen von Schutzmaßnahmen oder für die Anordnung von Aggregaten erforderlich ist, Ausfachungen vorzunehmen.

Diese Ausfachungen können bei Maschinen und Anlagen auch als Späneschutz, als Sichtschutz oder als Durchgreifschutz in Maschinenprozessen mit sich bewegenden Bauteilen verwendet werden.

Weitere Ausfachungen werden benötigt, u.B. elektrische, pneumatische oder hydraulische Bauteile in bestimmten Bereichen der Maschinengestelle übersichtlich anzuordnen.

Das Maschinenbausystem eignet sich u.a. auch zur Herstellung von Gehäusen bzw. Schränken.

Aus US-A-4 702 050 ist bekannt, eine Füllungsplatte in eine Verankerungsnut einer Systemprofilschiene einzuschieben. Hierbei muß die Füllungsplatte jedoch im wesentlichen den Abmaßen der Nut angepaßt sein. Nachteilig ist ferner, daß als Halterungsprofile für die Füllungsplatte Sonderprofile verwendet und um die Füllungsplatte herum gebaut werden müssen.

Der Erfindung liegt die Aufgabe zugrunde, eine Vorrichtung der eingangs genannten Art so zu gestalten, daß ein Einbau von Füllungsplatten in Rahmenfelder in einfacher Weise auch als Nachrüstung vorgenommen werden kann und die Verwendung von Spezialprofilen entfällt.

Diese Aufgabe wird erfindungsgemäß gelöst durch die im Patentanspruch 1 angegebenen Mittel und Maßnahmen. An jedem durch eine Systemprofilschiene gebildeten Rahmenholm ist mindestens ein Anlageteil oder ein Anlageprofil form- und/oder kraftschlüssig in einer Verankerungsnut festgelegt und das Anlageteil oder Anlageprofil weist eine Anlagefläche auf, an der die Füllungsplatte o.dgl. befestigt ist.

Bei einer vorteilhaften Ausführungsform ist das Anlageteil mit einem in die Verankerungsnut der zugeordneten Systemprofilschiene eingreifenden Befestigungsfuß ausgerüstet, der eine eine hinterschnittene Fläche der Verankerungsnut hintergreifende Fläche und eine außen an einer Randleiste der Verankerungsnut sich abstützende Fläche aufweist und die Flächen diagonal im Bereich der durch im Querschnitt winklige Randleisten begrenzten Längsöffnung der Verankerungsnut zueinander liegen.

Weitere Ausgestaltungen der Erfindung ergeben sich aus den Unteransprüchen.

Ausführungsbeispiele der erfindungsgemäßen Halterung sind in den Zeichnungen dargestellt und werden im folgenden beschrieben. Es zeigen:

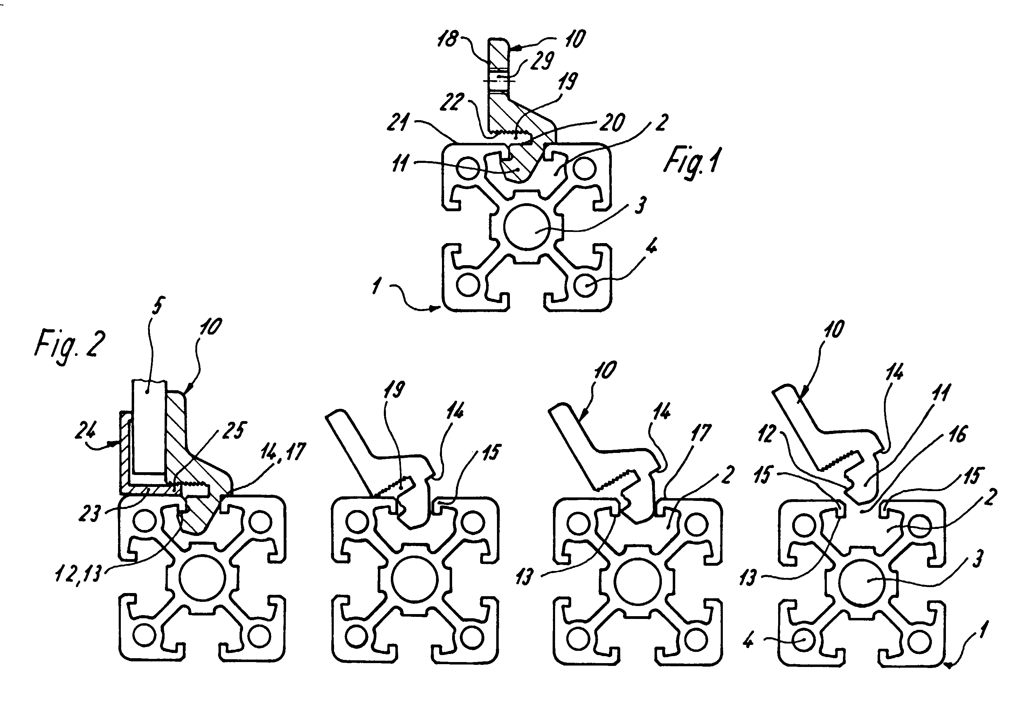

- Fig. 1: eine Systemprofilschiene mit zugeordnetem Anlageteil im Schnitt,
- Fig. 2: die verschiedenen Montageschritte eines Anlageteils und die Festlegung einer Füllungsplatte,
- Fig. 3 bis 6: weitere Ausführungen von Halterungen einer Füllungsplatte.

Die in den Figuren dargestellte Systemprofilschiene 1 ist mit sich über die gesamte Profillänge erstreckenden Verankerungsnuten 2 ausgerüstet, die nach außen und zu den Stirnflächen der Profilschiene geöffnet sind. Die Systemprofilschiene 1 ist symmetrisch ausgebildet und weist einen mittigen Kanal 3 sowie in den Eckbereichen vorgesehene Kanäle 4 auf. Diese Kanäle können als Schraubkanäle oder als Medium führende Kanäle verwendet werden.

Für die Halterung von Füllungsplatten 5,6,7,8,9 werden Anlageteile 10 oder Anlageprofile verwendet, die in der Verankerungsnut 2 form- und/oder kraftschlüssig festgelegt werden.

In den dargestellten Ausführungsbeispielen sind die Anlageteile 10 mit einem Befestigungsfuß 11 ausgerüstet, der mit seiner Fläche 12 eine hinterschnittene Fläche 13 der Verankerungsnut hintergreift und eine Fläche 14 aufweist, die sich außen an einer Randleiste 15 der Verankerungsnut abstützt. Die Randleisten 15, die die Öffnung 16 der Verankerungsnut 2 begrenzen, sind im Querschnitt winklig ausgebildet. Das Bezugszeichen 17 ist der Fläche der Randleiste 15 zugeordnet, an der sich die Fläche 14 des Anlageteils 10 abstützt. Die Flächen 13 und 14 liegen nach dem Einsetzen des Befestigungsfußes 11 in die Verankerungsnut diagonal im Bereich der Öffnung 16 der Verankerungsnut 2.

Der Befestigungsfuß 11 greift derart in die Verankerungsnut ein, daß aufgrund der Hebelwirkung eine Verklemmung und damit eine Spielfreiheit gegeben ist.

Das Anlageteil 10 weist eine Anlagefläche 18 für eine Füllungsplatte auf. Zwischen der Anlagefläche 18 und dem Befestigungsfuß 11 die Anlageteils 10 oder eines Anlageprofils ist bei dem dargestellten Ausführungsbeispiel eine Aufnahmenut 19 angeordnet, die an der der Systemprofilschiene 1 zugewandten Seite von einer Fläche 20 begrenzt wird, die mit der zugeordneten äußeren Fläche 21 der Systemprofilschiene 1 fluchtet.

Die der Fläche 20 gegenüberliegende Begrenzungsfläche der Aufnahmenut 19 weist eine Verzahnung 22 auf.

Die Aufnahmenut 19 erstreckt sich rechtwinklig zur Anlagefläche 18.

In die Aufnahmenut 19 kann ein Befestigungsschenkel 23 eines Winkelstücks 24 oder eines Winkelprofils eingeführt werden. Der Befestigungsschenkel 23 weist am freien Ende ebenfalls eine Verzahnung 25 auf, die in die Verzahnung 22 eingreift, so daß eine Anpassung der Lage des Winkelstücks 24 an die Dicke der Füllungsplatte vorgenommen werden kann und zwar feinstufig entsprechend der gewählten Verzahnung.

Der Schenkel 26 des Winkelstücks 24, der parallel zur Füllungsplatte verläuft, weist eine Randleiste 27 auf, die sich an der Füllungsplatte 8 abstützt. Die endgültige Festlegung der Füllungsplatte erfolgt mittels eines Gewindestifts 28, der in eine Gewindebohrung 29 des Anlageteils 10 eingeschraubt ist.

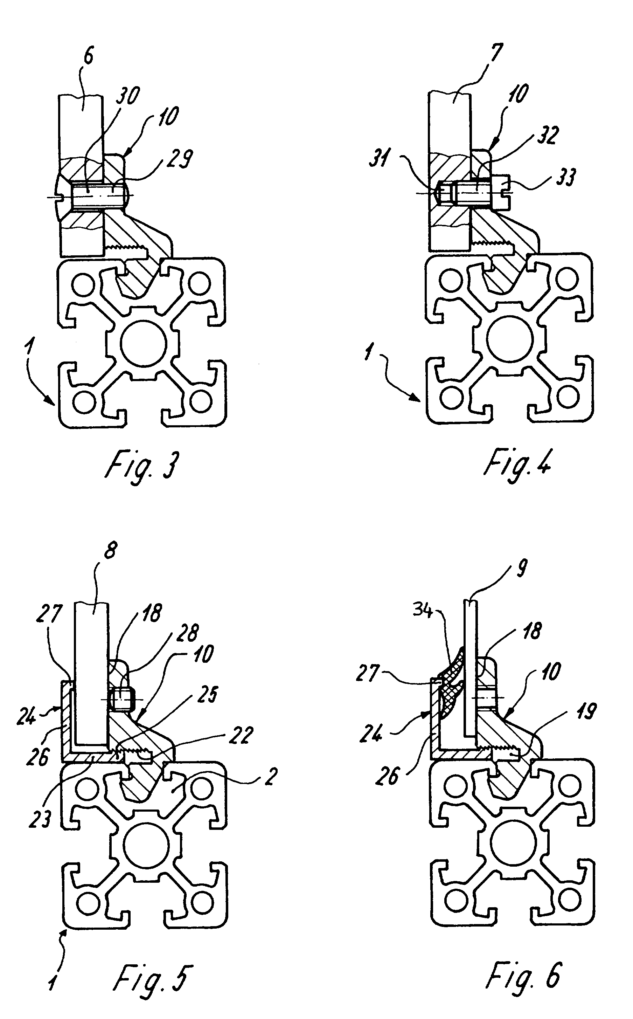

Bei dem Ausführungsbeispiel nach der Fig. 6 kann die Füllungsplatte 9 als Scheibe ausgebildet sein. Zur Halterung des Scheibenrandes ist zwischen dem Schenkel 26 des Winkelstücks 24 oder eines Winkelprofils und der Füllungsplatte 9 ein Steckdichtungsprofil 34 vorgesehen, durch das die Füllungsplatte kraftschlüssig an die Anlagefläche 18 des Anlageteils 10 gepreßt wird.

Bei dem Ausführungsbeispiel nach der Fig. 3 erfolgt die Festlegung der Füllungsplatte 6 mittels einer Senkkopfschraube 30, die sich durch eine Bohrung der Füllungsplatte erstreckt und mit ihrem Gewindeschaft in die Gewindebohrung 29 des Anlageteils 10 eingeschraubt ist.

Bei der Ausführungsform nach der Fig. 4 weist die Füllungsplatte 7 eine Gewindesackbohrung 31 auf, in die eine Befestigungsschraube 32 eingeschraubt ist, die durch die Gewindebohrung 29 des Anlageteils 10 geschraubt ist und sich mit ihrem Kopf 33 an dem Anlageteil abstützt.

Die Verzahnungen 22 und 25 werden vorzugsweise als Sägezahnverzahnungen ausgebildet.

Die Aufnahmenut 19 des Anlageteils 10 oder des Anlageprofils kann zusätzlich durch ein federndes Bauteil dazu genutzt werden, das Anlageteil oder das Anlageprofil in seiner Lage solange zu sichern, bis die Montage der Ausfachung endgültig erfolgt ist. Dieses Sicherungselement ist aber nur dann erforderlich, wenn zwischen der Verankerungsnut 2 und dem Befestigungsfuß 11 des Anlageteils oder des Anlageprofils Spiel vorhanden ist.

Das mit der Verzahnung 25 versehene Winkelstück 24, das mit seiner Verzahnung 22 der Aufnahmenut 19 eingreift, ermöglicht eine Festlegung unterschiedlich dicker Füllungsplatten in einem Bereich von 2 bis 8 Millimetern.

### Bezugszeichen

- 1: Systemprofilschiene
- 2: Verankerungsnut
- 3: Kanal
- 4: Kanal
- 5: Füllungsplattt
- 6: Füllungsplatte
- 7: Füllungsplatte
- 8: Füllungsplatte
- 9: Füllungsplatte
- 10: Anlageteile
- 11: Befestigungsfuß
- 12: Fläche
- 13: Fläche
- 14: Fläche
- 15: Randleiste
- 16: Öffnung
- 17: Bezugszeichen
- 18: Anlagefläche
- 19: Aufnahmenut
- 20: Fläche
- 21: Fläche
- 22: Verzahnung
- 23: Befestigungsschenkel
- 24: Winkelstück
- 25: Verzahnung
- 26: Schenkel
- 27: Randleiste
- 28: Gewindestift
- 29: Gewindebohrung
- 30: Senkkopfschraube
- 31: Gewindesackbohrung
- 32: Befestigungsschraube
- 33: Kopf

## Patentansprüche

1. Vorrichtung zur Festlegung von Füllungsplatten, Drahtgittern, Drahtgeweben o.dgl. in Rahmenfelder, bestehend aus die Rahmenfelder begrenzenden Rahmenholmen und Anlageteilen, **dadurch gekennzeichnet** , daß die Rahmenholme als Systemprofilschienen (1) ausgebildet sind, die nach außen und zu den Stirnflächen geöffnete, auf dem Umfang gleichmäßig verteilte Verankerungsnuten (2) aufweisen, deren äußere Nutöffnungen durch in das Nutinnere sich erstrec kende Randleisten (15) begrenzt sind, daß in eine Verankerungsnut einer jeden Systemprofilschiene (1) ein Befestigungsfuß (11) mindestens eines Anlageteils (10) oder eines Anlageprofils eingreift, der an der Systemprofilschiene (1) mit einer Fläche (12) eine innenliegende Längsrandfläche (13) einer Randleiste (15) der Verankerungsnut hintergreift und sich mit einer in der Höhenlage gegenüber der Fläche (12) versetzten Fläche (14) an der Außenfläche (17) der gegenüberliegenden Randleiste (15) der Verankerungsnut abstützt und daß die Füllungsplatte (5 bis 9) o.dgl. an einer Anlagefläche (18) des Anlageteils (10) oder des Anlage profils kraft- oder formschlüssig befestigt ist.

2. Vorrichtung nach Anspruch 1, dadurch gekennzeichnet, daß zwischen der Anlagefläche (18) und dem Befestigungsfuß (11) des Anlageteils (10) oder des Anlageprofils eine rechtwinklig von der Anlagefläche (18) ausgehende Aufnahmenut (19) für einen Befestigungsschenkel (23), der mit einer Verzahnung (25) versehen ist, eines Haltemittels angeordnet und die von der Anlagefläche (18) ausgehende Begrenzungsfläche der Aufnahmenut (19) mit einer Verzahnung (22) ausgestattet ist.

3. Vorrichtung nach Anspruch 2, dadurch gekennzeichnet, daß die der verzahnten Fläche gegenüberliegende Fläche (20) der Aufnahmenut (19) bei in der Verankerungsnut (2) der Systemprofilschiene (1) festgelegtem Anlageteil (10) mit der äußeren, zugeordneten Fläche (21) der Systemprofilschiene (1) fluchtet.

4. Vorrichtung nach einem der Ansprüche 1 bis 3, dadurch gekennzeichnet, daß der die Anlagefläche (18) bildende Schenkel des Anlageteils (10) mit einer rechtwinklig zur Anlagefläche sich erstreckenden Gewindebohrung (29) ausgestattet ist.

5. Vorrichtung nach Anspruch 4, dadurch gekennzeichnet, daß die Füllungsplatte (6,7) eine mit der Gewindebohrung (29) des Anlageteils (10) fluchtende, durchgehende Gewindebohrung oder eine Gewindesackbohrung aufweist.

6. Vorrichtung nach Anspruch 2, dadurch gekennzeichnet, daß das Haltemittel als Winkelstück (24) oder als Winkelprofil ausgebildet ist.

7. Vorrichtung nach Anspruch 4, dadurch gekennzeichnet, daß der parallel zur Füllungsplatte (8) sich erstreckende Schenkel (26) des Winkelstücks (24) eine sich an der Füllungsplatte abstützende Randleiste (27) aufweist und an der gegenüberliegenden Seite der Füllungsplatte ein in die Gewindebohrung (29) des Anlageteils (10) eingeschraubter Gewindestift (28) eingreift.

8. Vorrichtung nach Anspruch 7, dadurch gekennzeichnet, daß zwischen den parallel zur Füllungsplatte (9) sich erstreckenden Schenkel (26) des Winkelstücks und der Füllungsplatte (9) ein Steckdichtungsprofil 34 vorgesehen ist.

## Claims

1. An apparatus for fixing filling panels, wire meshes, wire grids or the like in frame openings, comprising fitting members and frame bar members defining the frame openings, characterised in that the frame bar members are in the form of system profile bars (1) having anchoring grooves (2) which are open outwardly and towards the end faces and which are uniformly distributed around the periphery and whose outer groove openings are defined by edge strip portions (15) extending into the groove interior, that engaging into an anchoring groove of each system profile bar (1) is a fixing foot (11) of at least one fitting member (10) or fitting profile which engages on the system profile bar (1) with a surface (12) behind an inwardly disposed longitudinal edge surface (13) of an edge strip portion (15) of the anchoring groove and bears with a surface (14) that is displaced in position in respect of height relative to the surface (12) against the outside surface (17) of the oppositely disposed edge strip portion (15) of the anchoring groove, and that the filling panel (5 to 9) or the like is force-lockingly or positively lockingly fixed to a contact surface (18) of the fitting member (10) or the fitting profile.

2. Apparatus according to claim 1 characterised in that arranged between the contact surface (18) and the fixing foot (11) of the fitting member (10) or the fitting profile is a receiving groove (9), which extends at a right angle from the contact surface (18), for a fixing limb (23), which is provided with a tooth configuration (25), of a holding means, and the boundary surface of the receiving groove (19), which boundary surface extends from the contact surface (18), is provided with a tooth configuration (22).

3. Apparatus according to claim 2 characterised in that the surface (20) of the receiving groove (19), which is opposite the toothed surface, aligns with the outer associated surface (21) of the system profile bar (1) when the fitting member (10) is fixed in the anchoring groove (2) of the system profile bar (1).

4. Apparatus according to one of claims 1 to 3 characterised in that the limb of the fitting member (10), which forms the contact surface (18), is provided with a screwthreaded bore (29) extending at a right angle to the contact surface.

5. Apparatus according to claim 4 characterised in that the filling panel (6, 7) has a blind screwthreaded bore or a through screwthreaded bore which is aligned with the screwthreaded bore (29) in the fitting member (10).

6. Apparatus according to claim 2 characterised in that the holding means is in the form of an angle member (24) or an angle profile portion.

7. Apparatus according to claim 4 characterised in that the limb (26) of the angle member (24), which extends parallel to the filling panel (8) has an edge strip portion (27) bearing against the filling panel and a screwthreaded pin (28) which is screwed into the screwthreaded bore (29) in the fitting member (10) engages at the opposite side of the filling panel.

8. Apparatus according to claim 7 characterised in that a push-on sealing member (34) is provided between the filling panel (9) and the limb (26) of the angle member, which extends parallel to the filling panel (9).

## Revendications

1. Dispositif pour fixer en position des plaques de remplissage, grilles métalliques, tissus métalliques ou analogues dans des panneaux de bâti, constitués de montants de bâti délimitant les panneaux de bâti et d'éléments d'application, **caractérisé** en ce que les montants de bâti sont réalisés sous la forme de profilés modulaires (1) qui présentent des rainures d'ancrage (2) ouvertes vers l'extérieur et vers les faces frontales, uniformément réparties sur la périphérie et dont les ouvertures extérieures de rainure sont délimitées par des rebords (15) dépassant vers l'intérieur de la rainure, en ce qu'un pied de fixation (11) d'au moins un élément d'application (10) ou d'un profilé d'application s'engage dans une rainure d'ancrage de chaque profilé modulaire (1), le pied de fixation (11) venant en prise, par une face (12), derrière une face limite longitudinale intérieure (13) d'un rebord (15) de la rainure d'ancrage du profilé modulaire (1) et s'appuyant contre la face extérieure (17) du rebord opposé (15) de la rainure d'ancrage par une face (14) décalée en hauteur par rapport à la face (12), et en ce que la plaque de remplissage (5 à 9) ou analogue est fixée par blocage ou par complémentarité de forme contre une face d'application (18) de l'élément d'application (10) ou du profilé d'application.

2. Dispositif selon la revendication 1, **caractérisé** en ce qu'est prévue, entre la face d'application (18) et le pied de fixation (11) de l'élément d'application (10) ou du profilé d'application, une rainure réceptrice (19) partant à angle droit de la face d'application (18) et destinée à recevoir une branche de fixation (23), pourvue d'une denture (25), d'un moyen de retenue, et en ce que la face de délimitation de la rainure réceptrice (19) qui part de la face d'application (18) est pourvue d'une denture (22).

3. Dispositif selon la revendication 2, **caractérisé** en ce que la face (20) de la rainure réceptrice (19), face qui est opposée à la face dentée, est, lorsque l'élément d'application (10) est fixé en position dans la rainure d'ancrage (2) du profilé modulaire (1), alignée avec la face extérieure associée (21) du profilé modulaire (1).

4. Dispositif selon l'une des revendications 1 à 3, **caractérisé** en ce que la branche de l'élément d'application (10) qui forme la face d'application (18) est pourvue d'un trou taraudé (29) s'étendant perpendiculairement à la face d'application.

5. Dispositif selon la revendication 4, **caractérisé** en ce que la plaque de remplissage (6, 7) présente un trou traversant taraudé ou un trou borgne taraudé, aligné avec le trou taraudé (29) de l'élément d'application (10).

6. Dispositif selon la revendication 2, **caractérisé** en ce que le moyen de retenue est réalisé sous la forme d'une équerre (24) ou d'une cornière.

7. Dispositif selon la revendication 4, **caractérisé** en ce que la branche (26) de l'équerre (24) qui s'étend parallèlement à la plaque de remplissage (8) présente un rebord (27) s'appuyant contre la plaque de remplissage, et en ce qu'une goupille filetée (28), vissée dans le trou taraudé (29) de l'élément d'application (10), s'appuie sur le côté opposé de la plaque de remplissage.

8. Dispositif selon la revendication 7, **caractérisé** en ce qu'un joint d'étanchéité profilé à emboîter (34) est prévu entre la branche (26) de l'équerre, qui s'étend parallèlement à la plaque de remplissage (9), et la plaque de remplissage (9).
